# EUROPEAN PATENT SPECIFICATION

(11) **EP 0 567 896 B1**
(45) Date of publication and mention of the grant of the patent: **02.07.1997**
(21) Application number: 93106355.6
(22) Date of filing: 20.04.1993
(51) Int. Cl.: C03B 11/08, G02B 3/00, G02B 5/18

(54) **Die for forming a micro-optical element, manufacturing method therefor, micro-optical element and manufacturing method therefor**
Pressform zur Herstellung eines mikro-optischen Elementes, zugehöriges Herstellungsverfahren, mikro-optisches Element und Herstellungsverfahren
Matrice pour la fabrication d'un élément micro-optique, procédé de fabrication adapté et élément micro-optique et procédé de fabrication

(30) Priority: 21.04.1992 JP 100835/92
(43) Date of publication of application: 03.11.1993
(73) Proprietor: MATSUSHITA ELECTRIC INDUSTRIAL CO., LTD., Kadoma-shi, Osaka-fu, 571 (JP)
(72) Inventor: Umetani, Makoto, 115-8, Izumi-shi, Osaka 594 (JP); Aoki, Masaki, 5-12-1, Minou-shi, Osaka 562 (JP)
(74) Representative: Eisenführ, Speiser & Partner

(56) References cited:
- EP-A- 0 404 481
- US-A- 4 842 633
- PATENT ABSTRACTS OF JAPAN vol. 015, no. 193 17 May 1991 & JP-A-03 050 127 (MATSUSHITA) 4 March 1991
- PATENT ABSTRACTS OF JAPAN vol. 006, no. 113 24 June 1982 & JP-A-57 041 870 (TOSHIBA) 9 March 1982
- PATENT ABSTRACTS OF JAPAN vol. 011, no. 346 12 November 1987 & JP-A-62 125 636 (HITACHI) 6 June 1987
- PATENT ABSTRACTS OF JAPAN vol. 016, no. 102 12 March 1992 & JP-A-03 279 901 (OMRON)

## Description

### BACKGROUND OF THE INVENTION

### Field of the Invention

The present invention relates to a method for manufacturing a die for forming a micro-optical element such as a grating, a micro-Fresnel lens or a micro-lens array, and a manufacturing method of such a micro-optical element.

### Description of the Prior Art

Previously, when a grating is produced, a thermo-plastic resin is processed directly to form a grating (cf. JP-A-54-110,857, and JP-A-60-25,761). However, such a resin grating has a disadvantage that the grating changes its volume or its shape with environment such as temperature or humidity. Then, the accuracy of the grating becomes worse. Further, because the strength of the resin is low, the surface is liable to be damaged. Thus, a very accurate and reliable grating cannot be produced with a thermo-plastic resin.

On the other hand, a glass grating has advantages that durability is good, that it is hard to be damaged on the surface, and that its accuracy is not deteriorated due to environment. A method is proposed wherein a glass grating is formed directly on the glass surface directly with dry etching (cf. JP-A-55-57,807). However, it takes a long time to produce a grating in this method, and the mass production of the gratings of the same shape is impossible.

Recently, mass production with use of press-molding of glass is proposed for an optical glass element such as an asymmetrical glass lens. If a very accurate optical glass element is produced with the press-molding method, the shape of the optical glass element is required to be reproduced well. Therefore, a material of a die used for the press-molding is required to be inactive for glass at high temperatures, to be sufficiently hard at a surface portion in contact with glass on forming the glass, difficult to be damaged by friction and the like, hard to be deformed plasticly or hard to grow crystal grains at the surface portion at high temperatures, superior on heat shock resistance and to be superior on the workability for very accurate forming.

The materials for a die which satisfy these conditions to some extent include SiC and Si₃N₄ (cf. JP-A-52-45,613). If SiC or Si₃N₄ is used as a die material, it is a problem that it is very difficult to form a die of a desired shape because the material is very hard. Further, the material is reactive with glass at high temperatures, and glass adheres to the die after repetitive forming with the press so that an accurate grating cannot be formed.

Further, a die is proposed recently wherein a base material of a hard metal is coated with a platinum group alloy thin film (cf. JP-A-60-246,230). The die can be used for grinding, but it cannot be used to produce a fine shape accurately. Thus, the die cannot be used as a die for grating.

JP-A-03-050127 discloses a manufacturing method of an optical glass element forming mold. With this known method, a sintered hard alloy consisting essentially of WC or a cermet consisting essentially of TiN, TiC, Cr₂O₃ or Al₂O₃ is used as base material for a couple of upper and lower forming dies and lapped. An intermediate layer of metallic Ni or an alloy consisting essentially of Ni-P or Ni-B is formed thereon, ground and highly precisely finished into a desired shape. A film of a metal nitride such as TiN, a metal carbide such as ZrC, a metal boride such as TaB₂, the alloys of Ir-W, Ru-W, Ir-Ta, Ru-Ta, Ir-Re and Ru-Re, etc., is formed thereon to obtain an optical glass element forming mold. The glass material obtained by spherically forming an optical glass is preheated, placed on the lower die of the forming mold, pressed and deformed by the upper die in a gaseous N₂ atmoshpere, then cooled and taken out as the optical glass element.

From EP-A-0 404 481, it is known a die for press-molding an optical element with high precision which die comprises a base material made of a material excellent in heat resistance, heat shock resistance and mechanical strenght at high temperature, an intermediate layer formed on the base material and made of a thin film excellent in grinding machinability and cutting machinability, and a surface protective layer formed on the intermediate layer and made of a metal thin film excellent in heat resistance and mechanical strength at high temperature and less reactive to a material of the optical element. Additional thin film may be inserted between the base material and the intermediate layer so as to enhance the adhesion strength between the base material and the intermediate layer.

Furthermore, JP-A-03-279901 describes the production of an optical element array. With this known method, a first master disk for optical elements is produced by plotting with an electron beam. Plural pieces of first metallic molds are then produced by executing electrocasting on the first master disk. Thereafter, plural micro-Fresnel lens profiles are formed on a lens array substrate by using plural pieces of the first metallic molds to produce a second master disk. A second metallic mold for molding the micro-Fresnel lens array is obtained by an electrocasting method using the second master disk. The optical element array is, therefore, produced by plotting with the electron beam without directly producing the master disk of the optical element array.

As to micro optical elements other than grating, a die for press-molding glass to form a reliable and accurate micro-optical element also has not yet been produced.

### SUMMARY OF THE INVENTION

It is an object of the present invention to provide a method for manufacturing a very endurable die easily which can press-mold glass repetitively to produce a large amount of very accurate and reliable micro-optical elements.

It is another object of the present invention to provide a method for manufacturing a glass micro-optical element.

In order to achieve the above objects, according to one aspect of the invention, there is provided a manufacturing method of a die for forming a micro-optical element, comprising the steps of:
providing a master of the micro-optical element to be manufactured;
forming a first layer on the surface of the master, which first layer has a first surface of an inverse shape of the master and is essentially made of a heat-resistant material;
separating the first layer from the master;
forming a flat second surface at the side of the first layer opposite to the first surface;
providing a base body having a flat plane and made of a hard metal, which might include tungsten carbide as a main component, a cermet including titanium carbide or titanium nitride as a main component or a WC sintered material;
adhering the second surface of the first layer to the flat plane of the base body; and
coating a second layer on the first surface of the first layer, which second layer is essentially made of a material which does not adhere to glass and is heat-resistant at high temperatures wherein the die is used.

Further advantageous embodiments of this method are defined in the sub-claims.

According to a further aspect of the present invention, there is provided a manufacturing method of a micro-optical element comprising the steps of:
providing a first die for the micro-optical element manufactured in steps of: providing a master of the micro-optical element to be manufactured; forming a first layer on the surface of the master, which first layer has a first surface of an inverse shape of the master and is essentially made of a heat-resistant material; separating the first layer from the master; forming a flat second surface at the side of the first layer opposite to the first surface; providing a base body having a flat plane and made of hard metal, which might include tungsten carbide as a main component, a cermet including titanium carbide or titanium nitride as a main component or a WC sintered material; adhering the second surface of the first layer to the flat plane of the base body; and coating a second layer on the first surface of the first layer, which second layer is essentially made of a material which does not adhere to glass and is heat-resistant at high temperatures wherein the die is used;
providing a second die produced in steps of:
   grinding a surface of the base body, and coating a third layer on the surface of the base body, which third layer is essentially made of a heat-resistant material;
   putting a glass plate between the first and second dies;
   heating the glass plate above the softening temperature of the glass plate; press-molding the glass plate between the first and second dies; and cooling the glass plate to take it out from between the two dies.

An advantage of a method for manufacturing a die for press-molding of the present invention is that the inverse shape of the master is reproduced well directly so that the die has an accurate shape.

A further advantage of a method of the present invention is that mass production of micro-optical elements is possible at a low cost.

An advantage of a micro-optical element of the present invention is that it has an accurate shape.

Another advantage of a micro-optical element of the present invention is that because a micro-optical element is made of glass, it is superior on durability and its shape does not change with the environment.

### BRIEF DESCRIPTION OF THE DRAWINGS

These and other objects and features of the present invention will become clear from the following description taken in conjunction with the preferred embodiments thereof with reference to the accompanying drawings, and in which:
Fig. 1 is a schematic sectional view of a grating master used in an embodiment of the present invention;
Fig. 2 is a schematic sectional view of a Ni-P alloy plate film duplicating the inverse shape of the grating master in an embodiment of the present invention;
Fig. 3 is a schematic sectional view of a die in a state wherein a Ni-P alloy plating film, duplicating the inverse shape of the die for grating, is adhered to a surface of a base material polished as a specular plane at the top and bottom planes of a cermet cylinder including TiN as a main component;
Fig. 4 is a schematic sectional view of a die in a state for press-molding of a grating of an embodiment of the present invention;
Fig. 5 is a schematic diagram of a press-molding machine used in an embodiment of the present invention.
Fig. 6 is a schematic sectional view of a grating manufactured according to an embodiment of the present invention;
Fig. 7 is a schematic sectional view of a die for press-molding for a micro-lens array of an embodiment of the present invention;
Fig. 8 is a schematic sectional view of a micro-lens array manufactured according to an embodiment of the present invention;
Fig. 9 is a schematic sectional view of a die for press-molding for a micro-combined optical element of an embodiment of the present invention; and
Fig. 10 is a schematic sectional view of a combined optical element manufactured according to an embodiment of the present invention;
Fig. 11 is a schematic sectional view of a die for press-molding for a micro-Fresnel lens of an embodiment of the present invention; and
Fig. 12 is a schematic sectional view of a micro-Fresnel lens of an embodiment of the present invention.

### DETAILED DESCRIPTION OF THE PREFERRED EMBODIMENTS

Referring now to the appended drawings, a die for press-molding of grating is explained first.

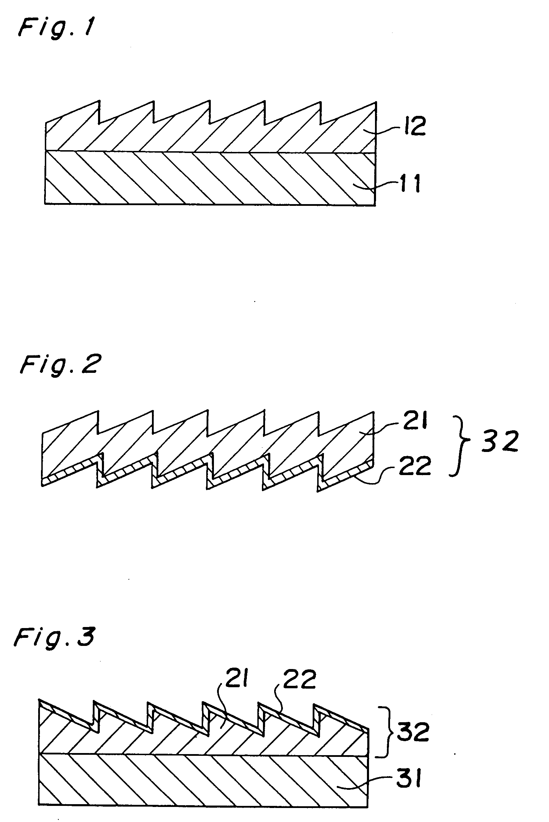

A grating master shown in Fig. 1 is produced as explained below. First, an aluminum (Al) thin film 12 is deposited on a flat glass substrate 11 and a saw-teethed grating shape of 2 µm pitch and 0.5 µm depth is formed accurately with a ruling engine. Next, after a releasing agent is coated on the surface of the grating master, a nickel (Ni) film 22 of about 0.1 µm thickness is deposited on the saw-teethed thin film 12, and further a thin film 21 of nickel-phosphor (Ni-P) alloy of 50 µm thickness is applied to the nickel film 22 with an electroplating process. The layer 32 comprising both films 21, 22 thus produced is released from the grating master. Thus, the shape of the grating master is transferred inversely to the thin film 22. Fig. 2 shows a section of the thin films layer 32 in this state.

Next, the rear surface of the Ni-P thin film 21 of the layer 32 is ground to have a flat surface. On the other hand, a cermet cylinder 31 having TiN as a main component and having 20 mm diameter and 6 mm thickness are polished to have top and bottom flat planes and the top plane is polished to have a specular flat surface. Then, the flat surface of the layer 32 is adhered with an adhering agent to the specular flat surface of the cermet cylinder. Fig. 3 shows the die in this state.

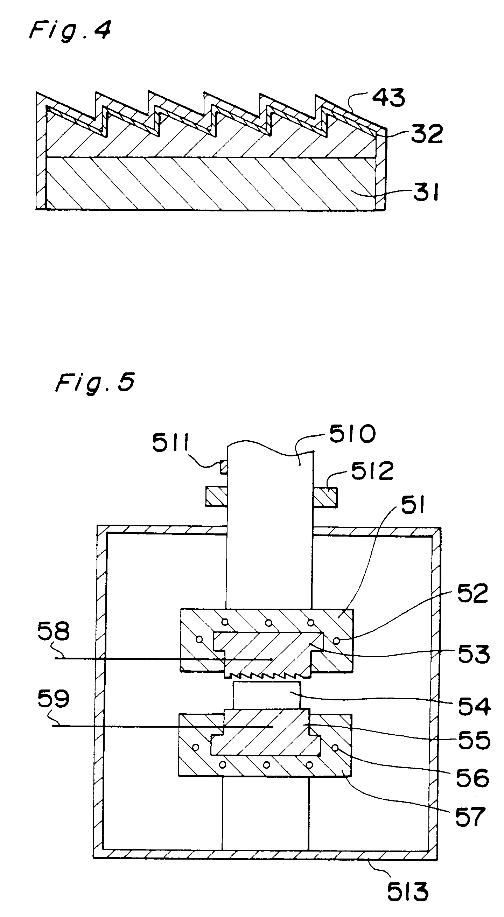

If glass is press-molded with the die shown in Fig. 3, the surface of the Ni-P thin film 22 is oxidized and a very accurate grating cannot be formed. Then, as shown in Fig. 4, a thin film 43 of platinum-ruthenium-tantalum (Pt-Ru-Ta) alloy of about 5 µm thickness is applied to the surface of the die with sputtering as a protective layer. Thus, a die for press-molding for a very accurate glass grating is completed.

That is, the die comprises the cermet base body 31, the layer 32 having an inverse shape of the grating master adhered to the base body 31, and the Pt-Ru-Ta alloy protective layer 43 applied to the layer 32. Because the die for press-molding explained above is an accurate replica of an inverse shape of the grating master shown in Fig. 1, very accurate glass gratings having the same shape of the grating master can be molded with the die.

Next, it is explained how a glass grating is manufactured with the die for press-molding. Fig. 5 illustrates a press-molding machine used in the present embodiment schematically. A top die 53 is fixed to a block 51, and the block 51 is fixed to a plunger 510. A heater 52 is provided in the block 51, and a thermo-couple 58 measures the temperature of the top die 53. On the other hand, a bottom die 59 is fixed to a block 57, and the block 57 is fixed to a base 514. A heater 56 is provided in the block 57, and a thermocouple 59 measures the temperature of the bottom die 59. A glass plate 54 to be molded is put between the top and bottom dies 53, 55. By driving the plunger 510 downward, the glass plate 54 is molded. A position sensor 511 is provided to detect a stopper 512 fixed to the plunger 510. A cover 513 encloses the top and bottom dies 53, 55.

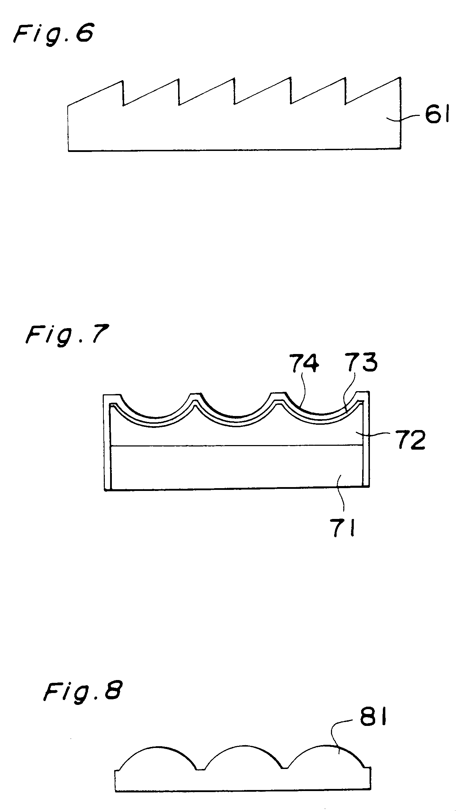

The die for press-molding shown in Fig. 4 is used as the top die 53, while a flat die is used as the bottom die 55. The flat die 55 is made from a cermet cylinder of 20 mm diameter and 6 mm thickness, having TiN as a main component. The top and bottom planes of the flat die 55 have flat surfaces, and the top plane is polished to have a specular plane and coated with a Pt-Ru-Ta alloy thin film of about 5 µm thickness as a protective layer on the cermet cylinder with sputtering. The glass plate 54 of trade name SF-8 which has been formed to be a disc of 10 mm radius and 1 mm thickness is put on the bottom die 55, and the top die 53 is put above the glass plate 54. Nitrogen environment is realized inside the cover 513. Then, the temperature is increased to 500 °C by the heaters 52, 56, and the pressure of about 40 kg/cm² is applied by the plunger 510 to deform the glass plate 54 between the top and bottom dies 53, 55 to produce a glass grating 61 as shown schematically in Fig. 6. Then, the temperature is decreased to 400 °C, and the resultant glass grating 61 is taken out from the press-molding machine.

The performance of the die is examined as explained below. After repeating the above-mentioned press-molding 10,000 times, the top and bottom dies 53 and 55 are taken out from the machine. Then, the die accuracy is evaluated for them by observing the state of the surface in contact with the glass plate 54 for press-molding with an optical microscope while by measuring the surface roughness (rms value, Å) at the same time. Because a prior art die is not available to form an accurate grating, two dies are prepared for comparison experiments; a flat die made of a prior art SiC sintered material, and a flat die of hard metal base body having WC as a main component coated with a Pt-Ir alloy film. They are used for press-molding repeatedly 10,000 times in the press-molding machine, and the die accuracy is evaluated thereafter. The results of the press-molding test are shown in Table 1.

**Table 1**

| Sample No. | Die | Surface roughness (rms, Å) | Surface state after press-molding of 10000 times | |
|---|---|---|---|---|
| | | | Surface roughness | Surface state |
| 1 | This invention | Top Die 9.0 | 9.2 | good |
| | | Bottom Die 9.2 | 9.5 | good |
| 2 | SiC sintered die | Top Die 12.2 | cannot be measured | Glass adhered |
| | | Bottom Die 11.8 | cannot be measured | Glass adhered |
| 3 | Die of WC coated with Pt-Ir | Top Die 9.11 | 9.3 | Good |
| | | Bottom Die 9.8 | 9.1 | Good |

The die (Sample No. 2) with a flat surface made of SiC sintered material cannot be used for press-molding any further after several press-molding as to both top and bottom dies because glass adheres to the surfaces thereof.

As to the die (Sample No. 3) with a flat surface made of WC base body coated with Pt-Ir alloy film, the surface roughness is 9.3 Å for the top die and 9.1 Å for the bottom die after 10,000 times press-molding. That is, the surface roughness for the top and bottom dies is nearly the same before press-molding, and this shows that the dies with a flat surface can be used for mass production. Further, the surface state of the dies does not change at all if compared to that before press-molding. Unfortunately, a die for grating having the same structure as the No. 3 sample cannot be produced because of difficulty of forming.

As to the die (Sample No. 1) of the present invention, the surface state does not change at all by repetitive press-molding, and the surface roughness does not change at all after 10,000 times press-molding. Therefore, the die of the present invention has a die life of about the same order as the No. 3 die though the die of the present invention has a surface of fine shape in contrast to the flat surface of the No. 3 die. That is, mass production of accurate glass gratings becomes possible by using the die of grating for press-molding.

As explained above, a die for press-molding of glass grating can be produced easily, and a die produced by this method has very good durability and has a long life. Thus, glass gratings can be press-molded repeatedly.

Further, by measuring the shape of 10,000 glass gratings produced with press-molding, it is observed that the gratings has the same shape as the grating master. Still further, after glass gratings manufactured as explained above are put for 300 hours in an environment of 60 °C temperature and 95% humidity, the shape thereof is measured, but no change of the shape is observed. Thus, the gratings are found very reliable.

A micro-optical element produced with the die has a very accurate shape. Because it is made of glass, the durability of the element is very superior, and a change due to temperature and humidity is extremely small if compared with that made of a thermo-plastic resin.

Though a cermet consisting TiN as a main component is used for the base body 31 of the die for press-molding, similar results can be obtained by using a hard metal consisting WC as a main component, a cermet consisting TiC as a main component or a WC sintered material for the base body 31.

The composite layer 32 is made of heat-resistant materials. It may be made of a heat-resistant metal, a heat-resistant metal oxide, a heat-resistant metal nitride or heat-resistant metal carbide.

Further, though a Pt-Ru-Ta alloy thin film is used as the protective layer 43, needless to say, other platinum group alloy films which is endurable and have little reactivity with glass may also be used to obtain similar results.

Still further, though the Ni-P alloy plating process with electroplating is used to form a thin film 22 having a transferred shape of the grating master shown in Fig. 1, any method for duplicating the inverse shape of the grating master can be used.

Further, mass production of other glass micro-optical elements than the grating having fine shapes also is not realized previously. However, a die for press-molding of such an optical element can also be manufactured similarly.

Fig. 7 shows a die for press-molding of a micro-lens array shown in Fig. 8. The micro-lens array consists of an array of micro-lenses each of 200 µm diameter which can be used for converging light to each pixel in a charge-coupled device, a liquid crystal panel or the like to use light efficiently.

A master of the micro-lens array is produced first. After a releasing agent is coated on the surface of the master, a nickel (Ni) film 73 of about 0.1 µm thickness is deposited on the surface of the master, and a thin film 72 of nickel-phosphor (Ni-P) alloy of 50 µm thickness is applied to the nickel film 73 with an electroplating process. Then, the two-layer thin films 72, 73 thus produced are separated from the master, and the shape of the master is transferred inversely to the thin film 73. The rear plane of the film 73 is ground to form a flat plane. On the other hand, a cermet cylinder 71 having TiN as a main component and having 20 mm diameter and 6 mm thickness are polished to have top and bottom planes and the top plane is polished to have a specular plane. Then, the thin film 72 is adhered with an adhering agent to the specular plane of the cermet cylinder. Further, a thin film 74 of platinum-ruthenium-tantalum (Pt-Ru-Ta) alloy of about 5 µm thickness is applied to the surface of the film 73 with sputtering as a protective layer. Then, the die shown in Fig. 7 is completed. By using the die as the top die 53 in the press-molding machine shown in Fig. 5, the micro-lens array shown in Fig. 8 can be produced accurately.

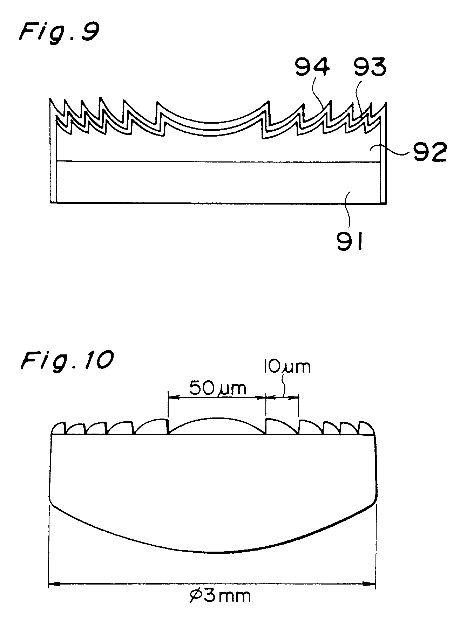

Fig. 9 is a schematic sectional view of a die for press-molding for a composite micro-optical element shown schematically in Fig. 10. The composite micro-optical element in this embodiment is a micro-grating lens integrated with a single convex lens of 3mm diameter, and it can reduce aberration.

A master of the composite micro-optical element is produced first. After a releasing agent is coated on the surface of the master, a nickel (Ni) film 93 of about 0.1 µm thickness is deposited on the surface of the master, and a thin film 92 of nickel-phosphor (Ni-P) alloy of 50 µm thickness is applied to the nickel film 93 with an electro-plating process. The two-layer thin films 92, 93 thus produced are separated from the master, and the shape of the master is transferred inversely to the thin film 93. The rear plane of the film 93 is ground to form a flat plane. On the other hand, a cermet cylinder 91 having TiN as a main component and having 20 mm diameter and 6 mm thickness are polished to have top and bottom planes and the top plane is polished to have a specular plane. Then, the thin film 92 is adhered with an adhering agent to the specular plane of the cermet cylinder. Further, a thin film 94 of platinum-ruthenium-tantalum (Pt-Ru-Ta) alloy of about 5 µm thickness is applied to the surface of the film 93 with sputtering as a protective layer. Then, the die shown in Fig. 9 is completed and is used as the top die 53. A die having a prescribed shape in correspondence with the shape of the convex lens is produced as the bottom die 55. By using the top and bottom dies 53, 55 in the press-molding machine shown in Fig. 5, composite optical elements shown in Fig. 10 can be produced accurately.

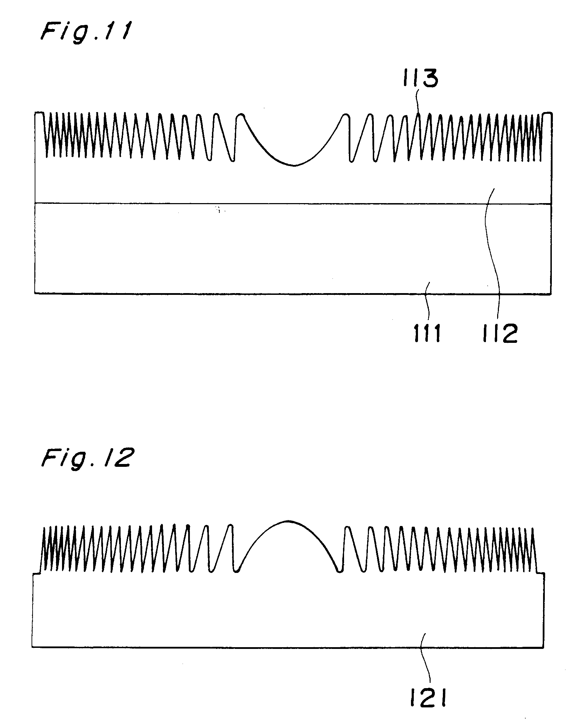

Fig. 11 shows a die for press-molding a micro-Fresnel lens shown in Fig. 12. The micro-Fresnel lens of 1.2 mm diameter is a diffraction type lens of a very thin thickness of 1 µm and it can be used for a photodetector, a beam splitter or the like.

A master of the micro-Fresnel lens is produced first. After a releasing agent is coated on the surface of the master, a nickel (Ni) film 113 of about 0.1 µm thickness is deposited on the surface of the surface of the master, and a thin film 112 of nickel-phosphor (Ni-P) alloy of 50 µm thickness is applied to the nickel film 113 with an electro-plating process. The two-layer thin films 112, 113 thus produced are released from the master, and the shape of the master is transferred inversely to the thin film 113. On the other hand, a cermet cylinder 111 having TiN as a main component and having 20 mm diameter and 6 mm thickness are polished to have top and bottom planes and the top plane is polished to have a specular plane. Then, the thin film 112 is adhered with an adhering agent to the specular plane of the cermet cylinder. Further, a thin film (not shown for brevity of drawing) of platinum-ruthenium-tantalum (Pt-Ru-Ta) alloy of about 5 µm thickness is applied to the surface of the film 113 with sputtering as a protective layer. Then, the die shown in Fig. 11 is completed. By using the die as the top die 53 in the press-molding machine shown in Fig. 5, the micro-Fresnel lenses shown in Fig. 12 can be produced accurately.

Although the present invention has been fully described in connection with the preferred embodiments thereof with reference to the accompanying drawings, it is to be noted that various changes and modifications are to be understood as included within the scope of the appended claims.

## Claims

1. A manufacturing method of a die (53) for forming a micro-optical element (61; 81; 121), comprising the steps of:
providing a master (11, 12) of the micro-optical element to be manufactured;
forming a first layer (21, 22; 32; 72, 73; 92, 93; 112, 113) on the surface of the master, which first layer has a first surface of an inverse shape of the master and is essentially made of a heat-resistant material;
separating the first layer (21, 22; 32; 72, 73; 92, 93; 112, 113) from the master;
forming a flat second surface at the side of the first layer (21, 22; 32; 72, 73; 92, 93; 112, 113) opposite to the first surface;
providing a base body (31; 71; 91; 111) having a flat plane and made of a hard metal, which might include tungsten carbide (WC) as a main component, a cermet including titanium carbide (TiC) or titanium nitride (TiN) as a main component or a WC sintered material;
adhering the second surface of the first layer (21, 22; 32; 72, 73; 92, 93; 112, 113) to the flat plane of the base body (31; 71; 91; 111); and
coating a second layer (43; 74; 94) on the first surface of the first layer, which second layer is essentially made of a material which does not adhere to glass and is heat-resistant at high temperatures wherein the die (53) is used.

2. The manufacturing method according to claim 1, wherein said first layer (21, 22; 32; 72, 73; 92, 93; 112, 113) is made of a heat-resistant metal, a heat-resistant metal oxide, a heat-resistant metal nitride or heat-resistant metal carbide.

3. The manufacturing method according to claim 1, wherein said first layer (21, 22; 32; 72, 73; 92, 93; 112, 113) is formed with a wet deposition process of electroplating or electroless plating or with a dry process of vacuum deposition, sputtering or ion plating.

4. The manufacturing method according to claim 1, wherein said second layer (43; 74; 94) is made of a platinum group alloy including at least one among platinum (Pt), rhodium (Rh), iridium (Ir), ruthenium (Ru) and osmium (Os).

5. The manufacturing method according to claim 1, wherein said micro-optical element is a grating (61).

6. The manufacturing method according to claim 1, wherein said micro-optical element is a micro-Fresnel lens (121).

7. The manufacturing method according to claim 1, wherein said micro-optical element is a micro-lens array (81).

8. A manufacturing method of a micro-optical element (61; 81; 121) comprising the steps of:
providing a first die (53) for the micro-optical element manufactured in steps of:
providing a master (11, 12) of the micro-optical element to be manufactured;
forming a first layer (21, 22; 32; 72, 73; 92, 93; 112, 113) on the surface of the master, which first layer has a first surface of an inverse shape of the master and is essentially made of a heat-resistant material; separating the first layer (21, 22; 32; 72, 73; 92, 93; 112, 113) from the master; forming a flat second surface at the side of the first layer (21, 22; 32; 72, 73; 92, 93; 112, 113) opposite to the first surface; providing a base body (31; 71; 91; 111) having a flat plane and made of hard metal, which might include tungsten carbide (WC) as a main component, a cermet including titanium carbide (TiC) or titanium nitride (TiN) as a main component or a WC sintered material; adhering the second surface of the first layer (21, 22; 32; 72, 73; 92, 93; 112, 113) to the flat plane of the base body (31; 71; 91; 111); and coating a second layer (43; 74; 94) on the first surface of the first layer, which second layer is essentially made of a material which does not adhere to glass and is heat-resistant at high temperatures wherein the die (53) is used;
providing a second die (55) produced in steps of:
grinding a surface of the base body, and coating a third layer on the surface of the base body, which third layer is essentially made of a heat-resistant material;
putting a glass plate (54) between the first and second dies (53, 55);
heating the glass plate (54) above the softening temperature of the glass plate (54);
press-molding the glass plate (54) between the first and second dies (53, 55); and cooling the glass plate (54) to take it out from between the two dies (53, 55).

## Patentansprüche

1. Herstellungsverfahren für eine Preßform (53) zum Herstellen eines mikrooptischen Elements (61; 81; 121) mit den Schritten, daß man
ein Bezugsformstück (11, 12) des herzustellenden mikrooptischen Elements bereitstellt;
auf der Oberfläche des Bezugsformstücks eine erste Schicht (21, 22; 32; 72, 73; 92, 93; 112, 113) bildet, wobei die erste Schicht eine erste Oberfläche von invertierter Gestalt des Bezugsformstücks aufweist und im wesentlichen aus einem hitzebeständigem Material hergestellt ist;
die erste Schicht (21, 22; 32; 72, 73; 92, 93; 112, 113) vom Bezugsformstück trennt;
eine flache zweite Oberfläche auf der Seite der ersten Schicht (21, 22; 32; 72, 73; 92, 93; 112, 113) bildet, die der ersten Oberfläche entgegengesetzt ist;
einen Grundkörper (31; 71; 91; 111) bereitstellt, der eine flache Ebene aufweist und aus einem harten Metall hergestellt ist, der Wolframcarbid (WC) als Hauptkomponente, eine Titancarbid (TiC) oder Titannitrid (TiN) als Hauptkomponente enthaltenden Metall/Keramik-Verbundwerkstoff oder ein gesintertes WC-Material enthalten kann;
die zweite Oberfläche der ersten Schicht (21, 22; 32; 72, 73; 92, 93; 112, 113) an die flache Ebene des Grundkörpers (31; 71; 91; 111) anhängt; und auf die erste Oberfläche der ersten Schicht eine zweite Schicht (43; 74; 94) aufbeschichtet, wobei die zweite Schicht im wesentlichen aus einem Material hergestellt ist, welches an Glas nicht haftet und welches bei den hohen Temperaturen, bei denen die Preßform (53) eingesetzt wird, hitzebeständig ist.

2. Herstellungsverfahren nach Anspruch 1, bei dem die erste Schicht (21, 22; 32; 72, 73; 92, 93; 112, 113) aus einem hitzebeständigen Metall, einem hitzebeständigen Metalloxid, einem hitzebeständigen Metallnitrid oder einem hitzebeständigen Metallcarbid hergestellt ist.

3. Herstellungsverfahren nach Anspruch 1, bei dem die erste Schicht (21, 22; 32; 72, 73; 92, 93; 112, 113) mit einem Feuchtabscheidungsverfahren des Elektroplatierens oder des stromlosen Platierens oder mit einem Trockenverfahren der Vakuumabscheidung, des Sputterns oder des Ionplatierens hergestellt wird.

4. Herstellungsverfahren nach Anspruch 1, bei dem die zweite Schicht (43; 74; 94) aus einer Legierung der Platingruppe hergestellt ist, welche mindestens einen Vertreter aus Platin (Pt), Rhodium (Rh), Iridium (Ir), Ruthenium (Ru) und Osmium (Os) enthält.

5. Herstellungsverfahren nach Anspruch 1, bei dem das mikrooptische Element ein Gitter (61) ist.

6. Herstellungsverfahren nach Anspruch 1,bei dem das mikrooptische Element eine Mikro-Fresnellinse (121) ist.

7. Herstellungsverfahren nach Anspruch 1, bei dem das mikrooptische Element ein Mikro-Linsenarray (81) ist.

8. Herstellungsverfahren für ein mikrooptisches Element (61; 81; 121) mit den Schritten, daß man
ein erstes Preßstück (53) für das mikrooptische Element bereitstellt, welches hergestellt wurde mit den Schritten, daß man
ein Bezugsformstück (11, 12) des herzustellenden mikrooptischen Elements bereitstellt;
auf der Oberfläche des Bezugsformstücks eine erste Schicht (21, 22; 32; 72, 73; 92, 93; 112, 113) bildet, wobei die erste Schicht eine erste Oberfläche von invertierter Gestalt des Bezugsformstücks aufweist und im wesentlichen aus einem hitzebeständigem Material hergestellt ist;
die erste Schicht (21, 22; 32; 72, 73; 92, 93; 112, 113) vom Bezugsformstück trennt;
eine flache zweite Oberfläche auf der Seite der ersten Schicht (21, 22; 32; 72, 73; 92, 93; 112, 113) bildet, die der ersten Oberfläche entgegengesetzt ist;
einen Grundkörper (31; 71; 91; 111) bereitstellt, der eine flache Ebene aufweist und aus einem harten Metall hergestellt ist, der Wolframcarbid (WC) als Hauptkomponente, eine Titancarbid (TiC) oder Titannitrid (TiN) als Hauptkomponente enthaltenden Metall/Keramik-Verbundwerkstoff oder ein gesintertes WC-Material enthalten kann;
die zweite Oberfläche der ersten Schicht (21, 22; 32; 72, 73; 92, 93; 112, 113) an die flache Ebene des Grundkörpers (31; 71; 91; 111) anhängt; und auf die erste Oberfläche der ersten Schicht eine zweite Schicht (43; 74; 94) aufbeschichtet, wobei die zweite Schicht im wesentlichen aus einem Material hergestellt ist, welches an Glas nicht haftet und welches bei den hohen Temperaturen, bei denen die Preßform (53) eingesetzt wird, hitzebeständig ist;
ein zweites Preßstück (55) bereitstellt, welches mit den Schritten hergestellt wurde, daß man
eine Oberfläche des Grundkörpers schleift und eine dritte Schicht auf die Oberfläche des Grundkörpers aufbeschichtet, wobei die dritte Schicht im wesentlichen aus einem hitzebeständigen Material hergestellt ist;
eine Glasplatte (54) zwischen der ersten und der zweiten Preßform (53, 55) anordnet;
die Glasplatte (54) bis auf über die Erweichungstemperatur der Glasplatte (54) erwärmt;
die Glasplatte (54) zwischen der ersten und der zweiten Preßform (53, 55) preßformt; und
die Glasplatte (54) abkühlt, um sie aus dem Bereich zwischen den zwei Preßformen (53, 55) herauszunehmen.

## Revendications

1. Procédé de fabrication d'une matrice (53) destinée à former un élément micro-optique (61 ; 81 ; 121), comprenant les étapes consistant à :
procurer un modèle-maître (11, 12) de l'élément micro-optique à fabriquer,
former une première couche (21, 22 ; 32 ; 72, 73 ; 92, 93 ; 112, 113) sur la surface du modèle-maître, laquelle première couche comporte une première surface de forme inverse à celle du modèle-maître et est essentiellement faite d'un matériau résistant à la chaleur,
séparer la première couche (21, 22 ; 32 ; 72, 73 ; 92, 93 ; 112, 113) du modèle-maître,
former une seconde surface plate sur le côté de la première couche (21, 22 ; 32 ; 72, 73 ; 92, 93 ; 112, 113) opposé à la première surface,
procurer un corps de base (31 ; 71 ; 91 ; 111) comportant un plan plat et fait d'un métal dur, qui pourrait comprendre du carbure de tungstène (WC) comme composant principal, d'un cermet comprenant du carbure de titane (TiC) ou du nitrure de titane (TiN) comme composant principal, ou d'un matériau fritté de carbure de tungstène,
faire adhérer la seconde surface de la première couche (21, 22 : 32 ; 72, 73 ; 92, 93 ; 112, 113) au plan plat du corps de base (31 ; 71 ; 91 ; 111), et
appliquer une seconde couche (43 ; 74 ; 94) sur la première surface de la première couche, laquelle seconde couche est essentiellement faite d'un matériau qui n'adhère pas au verre et qui résiste à la chaleur aux températures élevées auxquelles la matrice (53) est utilisée.

2. Procédé de fabrication selon la revendication 1, dans lequel ladite première couche (21, 22 ; 32 ; 72, 73 ; 92, 93 ; 112, 113) est faite d'un métal résistant à la chaleur, d'un oxyde métallique résistant à la chaleur, d'un nitrure métallique résistant à la chaleur ou d'un carbure métallique résistant à la chaleur.

3. Procédé de fabrication selon la revendication 1, dans lequel ladite première couche (21, 22 ; 32 ; 72, 73 ; 92, 93 ; 112, 113) est formée à l'aide d'un procédé de dépôt par voie humide de dépôt électrolytique ou chimique, ou bien à l'aide d'un procédé par voie sèche de dépôt sous vide, de pulvérisation cathodique ou de plaquage ionique.

4. Procédé de fabrication selon la revendication 1, dans lequel ladite seconde couche (43 ; 74 ; 94) est faite d'un alliage du groupe platine comprenant au moins l'un parmi le platine (Pt), le rhodium (Rh), l'iridium (Ir), le ruthénium (Ru) et l'osmium (Os).

5. Procédé de fabrication selon la revendication 1, dans lequel ledit élément micro-optique est un réseau de diffraction (61).

6. Procédé de fabrication selon la revendication 1, dans lequel ledit élément micro-optique est une micro-lentille de Fresnel (121).

7. Procédé de fabrication selon la revendication 1, dans lequel ledit élément micro-optique est un réseau de micro-lentilles (81).

8. Procédé de fabrication d'un élément micro-optique (61 ; 81 ; 121), comprenant les étapes consistant à :
procurer une première matrice (53) permettant de former l'élément micro-optique, fabriquée à l'aide des étapes consistant à :
procurer un modèle-maître (11, 12) de l'élément micro-optique à fabriquer,
former une première couche (21, 22 ; 32 ; 72, 73 ; 92, 93 ; 112, 113) sur la surface du modèle-maître, laquelle première couche comporte une première surface de forme inverse à celle du modèle-maître et est essentiellement faite d'un matériau résistant à la chaleur, séparer la première couche (21, 22 ; 32 ; 72, 73 ; 92, 93 ; 112, 113) du modèle-maître, former une seconde surface plate sur le côté de la première couche (21, 22 ; 32 ; 72, 73 ; 92, 93 ; 112, 113) qui est opposée à la première surface, procurer un corps de base (31 ; 71 ; 91 ; 111) comportant un plan plat et fait d'un métal dur, qui pourrait comprendre du carbure de tungstène (WC) comme composant principal, d'un cermet comprenant du carbure de titane (TiC) ou du nitrure de titane (TiN) comme composant principal, ou d'un matériau fritté de carbure de tungstène, faire adhérer la seconde surface de la première couche (21, 22 ; 32 ; 72, 73 ; 92, 93 ; 112, 113) au plan plat du corps de base (31 ; 71 ; 91 ; 111), et appliquer une seconde couche (43 ; 74 ; 94) sur la première surface de la première couche, laquelle seconde couche est essentiellement faite d'un matériau qui n'adhère pas au verre et qui résiste à la chaleur aux températures élevées auxquelles la matrice (53) est utilisée,
procurer une seconde matrice (55) réalisée à l'aide des étapes consistant à :
polir une surface du corps de base, et appliquer une troisième couche sur la surface du corps de base, laquelle troisième couche est essentiellement faite d'un matériau résistant à la chaleur,
placer une plaque de verre (54) entre les première et seconde matrices (53, 55), chauffer la plaque de verre (54) au-dessus de la température de ramollissement de la plaque de verre (54),
mouler la plaque de verre (54) par compression entre les première et seconde matrices (53, 55), et
refroidir la plaque de verre (54) pour la sortir d'entre les deux matrices (53, 55).
